# EUROPEAN PATENT SPECIFICATION

(11) **EP 0 764 042 B1**
(45) Date of publication and mention of the grant of the patent: **13.11.2002**
(21) Application number: 95929305.1
(22) Date of filing: 02.06.1995
(51) Int. Cl.: B01D 11/04, C22B 3/00, B01D 11/02

(54) **FLUID EXTRACTION**
EXTRAKTION EINES FLUIDS
EXTRACTION DE FLUIDE

(30) Priority: 02.06.1994 US 253000
(43) Date of publication of application: 26.03.1997
(73) Proprietor: IDAHO RESEARCH FOUNDATION, INC., Moscow, ID 83843-0178 (US)
(72) Inventor: WAI, Chien, Moscow, ID 83843 (US); SMART, Neil, Moscow, ID 83843 (US); LIN, Yuehe, Moscow, Idaho 83843 (US)
(74) Representative: Gowshall, Jonathan Vallance
(86) International application number: PCT/US95/06938
(87) International publication number: WO 95/033542

(56) References cited:
- US-A- 4 529 503
- US-A- 4 898 673
- US-A- 5 274 129
- US-A- 5 356 538

## Description

### FIELD OF THE INVENTION

This invention concerns extraction of metalloids and metals from solids and liquids, and is more particularly directed to a treatment process in which metals are efficiently extracted from acidic waste material.

### BACKGROUND OF THE INVENTION

A particular environmental problem is the removal of toxic metals and radioisotopes from solid or liquid industrial wastes. Such contaminants can be removed from soils, for example, by treating the soil with an acid that dissolves the metals. Acid dissolution is followed by selective precipitation, electrowinning, or solvent extraction. Acid dissolution is unfortunately very nonspecific, and often produces many by-products that can create serious environmental problems in their own right.

An alternative detoxification process is to encapsulate contaminants in a container or insoluble matrix that prevents their entry into the environment. This approach still requires storage of the bulky matrix, and does not allow regeneration or reuse of the contaminants. Hence there is a need for a biologically compatible waste treatment process that efficiently and effectively separates metals from contaminated materials. There also is a need for such a process that is biologically compatible and permits selective regeneration and reuse of the contaminants.

Fluid extraction and supercritical fluid extraction are methods known to be useful for selectively removing materials from a matrix. A supercritical fluid is typically one that is gaseous at ambient conditions, but which is maintained at a temperature and pressure above its critical temperature and pressure. Although materials may perform as solvents at sub-critical temperatures and pressures, fluids often perform better as solvents at supercritical conditions.

However, direct extraction of metal ions by supercritical fluids, such as carbon dioxide, generally is inefficient. One reason for this may be because of the weak van der Waals interaction between metal ions and carbon dioxide. This weak interaction has apparently discouraged efforts to perform supercritical fluid extraction of metals from environmental wastes.

### SUMMARY OF THE INVENTION

The present invention provides a method for extracting a metal or metalloid species (including lanthanides and actinides) from an aciolic media according to claim 10. The carbon dioxide and chelating agent are exposed to the solid or liquid for a sufficient period of time to form a chelate between the species and chelating agent. The carbon dioxide is then removed from the media with the solubilized metal chelate dissolved therein. The metal chelates subsequently can be precipitated from the fluid. For example, if the fluid is supercritical, then the metal chelates can be precipitated by reducing the pressure of the supercritical fluid. The chelating agent can also be regenerated for reuse. This process is an efficient, cost-effective method for removing metals from the environment without using environmentally harmful extraction solvents.

The chelating agents can be trialkyl phosphates, trialkylphosphine oxides or mixtures thereof.

At least one of the chelating agents forms chelates with the species. The chelated material is then soluble in the carbon dioxide. The carbon dioxide may be subcritical, but preferred embodiments use supercritical carbon dioxide.

The phosphate chelating agents generally are represented by the formula 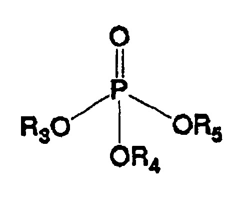 wherein R₃ - R₅ are lower alkyl groups. As used herein, "lower alkyl" refers to compounds having 10 or fewer carbon atoms, both straight and branched chains. The phosphine oxide chelating agents generally are represented by the formula 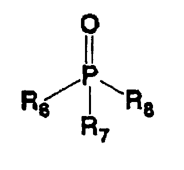 wherein R₆ - R₈ are lower alkyl groups. The method is best applied to acidic solutions, such as solutions comprising nitric acid. The solutions also may include a metal salt, such as a nitrate salt. Optimal chelating agents currently are selected from the group consisting of tributyl phosphate, tributylphosphine oxide, tri-n-octylphosphine oxide, and mixtures thereof.

Thus, a preferred method according to the invention comprises extracting metal or metalloid species from a nitric acid solution that contains a nitrate salt. The method comprises exposing the acidic solution to supercritical carbon dioxide containing a chelating agent selected from the group consisting of tributyl phosphate, tributylphosphine oxide, tri-n-octylphosphine oxide, and mixtures thereof.

Still another embodiment of the method involves treating acidic waste material that includes metalloid and metal waste species in a container. The waste material in the container is exposed to the supercritical carbon dioxide which contains a chelating agent selected from the group consisting of trialkyl phosphates, trialkylphosphine oxides, and mixtures thereof. As with the previous embodiments, at least one of the chelating agents forms chelates with the species, the chelates being soluble in the carbon dioxide. The carbon dioxide and solubilized waste species are then removed from the container.

Each embodiment of the method may further comprise adding a modifier to the carbon dioxide. The modifier may enhance the efficiency of the extraction method by increasing the solubility of the metal chelate in the supercritical fluid. Carbon dioxide, for example, is a relatively non-polar solvent. Its polarity can be increased by adding a more polar solvent to the supercritical carbon dioxide. Disclosed examples of more polar solvents include, without limitation, water and lower alkyl alcohols and esters, particularly low to medium boiling point alcohols or esters, such as methanol, ethanol and ethyl acetate. The water, alcohol or ester appears to increase the polarity of the supercritical fluid, enhance the solubility of the metal chelate in the fluid, and further improve the extraction efficiency of the method.

The invention also provides a composition for extracting metal or metalloid species from acidic media. The composition comprises carbon dioxide and a chelating agent as described above, and also may contain a salt, such as, without limitation, a nitrate salt. The composition also may include a modifier selected from the group consisting of water, lower alkyl alcohols, lower alkyl esters, and mixtures thereof.

Accordingly, it is an object of this invention to provide an improved method for extracting metal or metalloid species from liquids or solids, including complex matrices.

Another object of the invention to provide such an improved method that allows efficient and biologically compatible extraction of metal or metalloid species from the environment.

Another object is to provide such an improved method that allows selectivity as to the type of metal or metalloid species extracted by the system.

Another object is to provide such an improved method that can selectively extract lanthanides and actinides.

Another object of this invention is to provide such an improved method that is efficient and economical compared to many other extraction processes.

Another object of this invention is to provide a process for the selective removal of ions from acidic media.

These and other objects of the invention will be understood more clearly by reference to the following drawings and detailed description.

### BRIEF DESCRIPTION OF THE DRAWINGS

FIG. 1 is a phase diagram for carbon dioxide.
FIG. 2 is a schematic drawing of a waste treatment system in accordance with the present invention.

### DETAILED DESCRIPTION OF SEVERAL PREFERRED EMBODIMENTS

The present invention is suitable for removing many different types of metalloids or metals from liquids or solids. Metalloids are elements with both metallic and non-metallic properties, and include arsenic, selenium and tellurium. A metal is an element that forms positive ions in solutions, and produces oxides that form hydroxides rather than acids with water. Metals include alkali metals, alkali-earth metals, transition metals, noble metals (including the precious metals gold, platinum and silver), rare metals, rare-earth metals (lanthanides), actinides (including the transuranic metals), light metals, heavy metals, synthetic metals and radioactive metals. Specific examples are given herein of extraction methods for removing lanthanides and actinides (collectively referred to as the f-group elements from the filling of their 4f and 5f orbitals). The present invention also provides specific examples of extraction methods for radioactive metals, such as uranium, particularly the extraction of such metals from acidic solutions. This provides an attractive alternative to the PUREX process for recovering uranyl ions from acidic solutions.

Carbon dioxide is a currently optimal fluid for both subcritical and supercritical fluid extractions because of its moderate chemical constants (T_{C}=31°C, P_{C}73 atm) and its inertness (i.e. it is non-explosive and thoroughly safe for extractions, even extractions performed at supercritical conditions). Carbon dioxide also is used because it is abundantly available and relatively inexpensive.

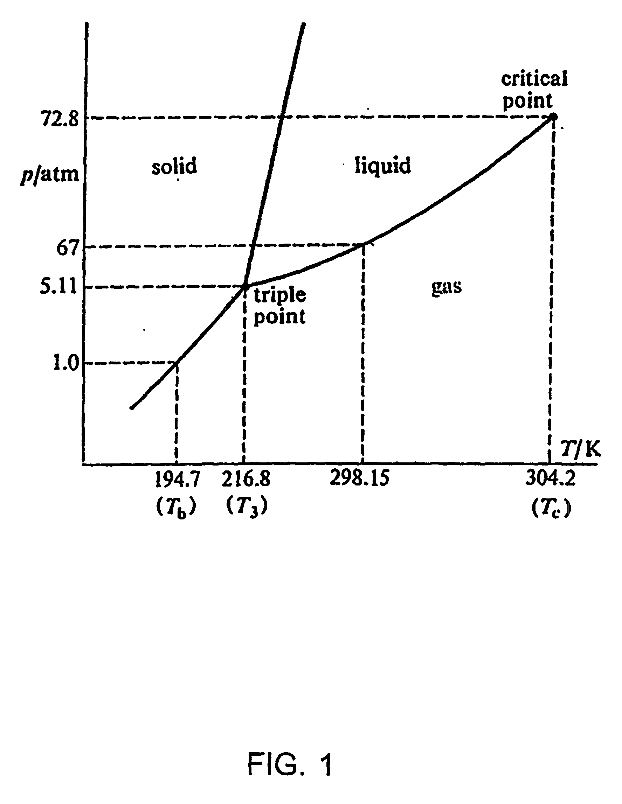

The conditions necessary to produce subcritical or supercritical carbon dioxide can be determined using a phase diagram for carbon dioxide as shown in FIG. 1. Although all conditions above the triple point (T_{P}) produce a carbon dioxide fluid solvent effective for practicing the present invention, the preferred carbon dioxide solvent is supercritical. Therefore the conditions typically must be above the critical temperature and pressure for carbon dioxide. However, virtually any conditions that are above the critical point are acceptable for producing a supercritical carbon dioxide fluid solvent useful for practicing the extraction process of the present invention.

In addition, a modifier may be added to the fluid, including supercritical fluids, to improve the solvent characteristics thereof. The most useful modifiers are water, and organic solvents such as the low to medium boiling point alcohols and esters, particularly the lower alkyl alcohols and the lower alkyl esters. Typical organic modifiers include methanol, ethanol, ethyl acetate and the like. The modifiers are added in sufficient concentrations to enhance the solubility of the metal or metalloid species in the extracting material. With more specificity, but without limitation, the modifiers typically are added to the fluids at proportions of between about 0.1% and 20.0% by weight. The modifiers contemplated for use herein are most typically not supercritical fluids at the disclosed operating conditions. Rather, the modifiers are simply dissolved in the fluid solvents, including the supercritical fluid solvents, to improve their solvent properties.

In one embodiment the chosen enhancer is combined with a supercritical fluid at the described proportions prior to feeding the supercritical fluid to the extraction vessel. Alternatively, the supercritical fluid is fed to the extraction vessel without the enhancer. The einhancer is then introduced into the extraction vessel and thereby combined with the supercritical fluid.

### I. Fluid Extraction Apparatus and Method

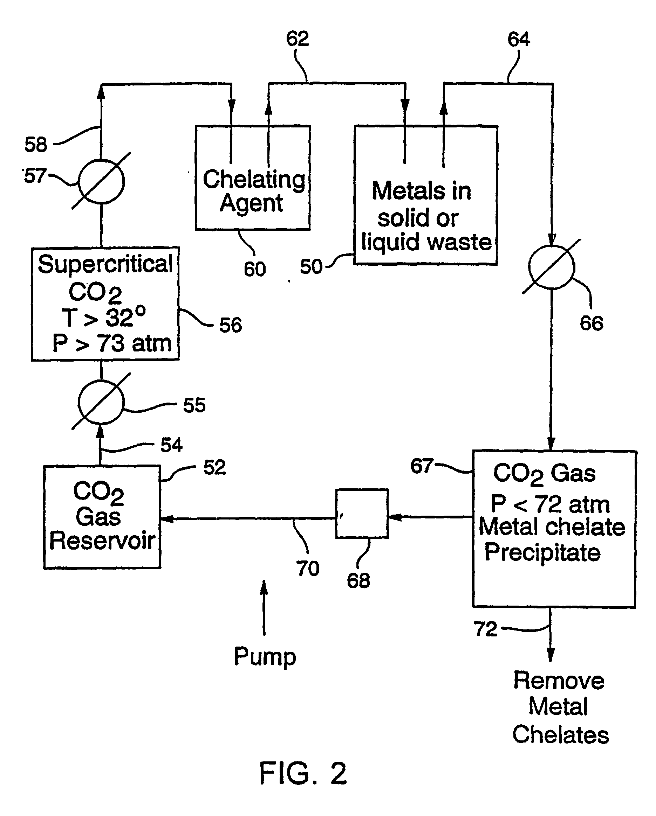

One proposed embodiment for a continuous selective-chelation supercritical fluid extraction process is illustrated in FIG. 2. This process is suitable for chelating metals that are contained in solid or liquid waste held in a container 50. Supercritical carbon dioxide gas is supplied from a reservoir 52 which is connected by a conduit 54 containing a valve 55 to a pressurization unit 56. Unit 56 increases the pressure on the gas to greater than 73 atmospheres at a temperature of greater than 32°C to form supercritical carbon dioxide. The supercritical CO₂ then travels through a valve 57 and conduit 58 to a reservoir 60 that holds a solid or liquid chelating agent, such as any of the agents described in the examples of this specification. The CO₂ is there passed through a column containing solid or liquid chelating reagent to extract the chelating agent into the supercritical fluid CO₂ stream. The supercritical fluid and chelating agent leave reservoir 60 through a conduit 62 and are introduced into container 50.

The supercritical fluid/chelating agent is intimately mixed with the solid or liquid waste in container 50 using either a batch or continuous process. In a batch process, simple mixing would occur through stirring or sonification. Alternatively, mixing could occur by allowing CO₂ to flow through a column of solid waste. In a continuous mixing embodiment, CO₂ would flow through a column of solid waste material. Continuous mixing with a liquid waste could be achieved with counter current flow.

After mixing, the metal chelate and CO₂ are removed through a conduit 64. A depressurizer valve 66 is present in line 64 to reduce the pressure to below seventy-two atmospheres such that the metal chelate precipitates in container 67. The CO₂ gas is then recycled by pump 68 through line 70 to gas reservoir 52. Metal chelates can be removed from the bottom of container 67 through line 72 such that the chelating agent can be regenerated from the metal chelate. When regeneration of the chelating agent is desired, metal ions can be stripped from the chelate using a nitric acid solution having a pH less than one.

The extraction system should be thermally controlled, either by known electrical means or immersion in a constant temperature bath. Thermal control allows the carbon dioxide or other supercritical fluid to be maintained above its supercritical temperature.

### II. CO₂ SFE of Metals/Metalloids from Acidic Media

One specific embodiment of the present invention is useful for extracting radioactive ions from solid and liquid materials. For instance, the described SFE process can be used to extract actinides in acid solutions such as those produced by the PUREX process (Plutonium Uranium Recovery by Extraction). In the PUREX process, nuclear fuel material is first dissolved in hot nitric acid followed by extraction of the dissolved uranium and plutonium with an organic solvent containing 20-30% tributyl phosphate (TBP) in kerosene or in n-dodecane. Supercritical fluid extraction of metals and metalloids in acid solutions using carbon dioxide also has proven useful.

### EXAMPLE I

This example concerns the extraction of U(VI), Th(IV) and Nd(III) from 6 molar nitric acid (HNO₃). The ligands used for this example included TBP, thenoyltriflouroacetone (TTA), tri-n-octylphosphine oxide (TOPO) and TTA. For the TBP experiments, the ligand (5ml TBP) was placed in a stainless steel vessel with supercritical carbon dioxide introduced from the bottom of the vessel. In this arrangement, the fluid phase is saturated with TBP. For the extractions with a binary mixture of TBP and TTA, supercritical carbon dioxide was first saturated with TBP. The fluid phase then passed through a second ligand cell containing 100 mg of TTA. After this, the supercritical fluid, saturated with both TBP and TTA, was introduced into a liquid extraction cell from the bottom. The extraction conditions were 15 minutes static extraction followed by 15 minutes of dynamic extraction at 60°C and 150 atm. The supercritical conditions were 60°C and 150 atmospheres. The results of these extractions are presented below in Table II, which shows that the mixed ligand composition provides a novel and efficient means for removing radioactive ions from acidic solutions, without using toxic or flammable organic chemicals for the extraction process. Thus, the present invention provides an attractive alternative for the PUREX process.

**TABLE II**

| Extraction of U(VI), Th(IV), and Nd(III) from 6 M Nitric Acid with Supercritical CO₂ and Mixed Ligands | | | |
|---|---|---|---|
| | %Extraction | | |
| Ligands | U | Th | Nd |
| TBP | 91 | 89 | 67 |
| TBP+TTA | 95 | 82 | 75 |
| TBP+TTA | 97 | 91 | 77 |
| TOPO+TTA | 99 | 99 | 73 |
| a. Sample composition: 50 µg/mL each of U, Th, and Nd in 6M HNO₃+3M LiNO₃ | | | |
| b. Extraction conditions: 15 min static plus 15 min dynamic extraction at 60°C and 150 atm. | | | |

Table II shows that TBP alone can extract uranyl, Th(IV) and Nd(III) from 6 M HNO₃ with a reasonably high efficiency at 60°C and 150 atm. Without limiting the extraction of metal and/or metalloid ions from acidic solutions to one theory of operation, it appears that these ions are extracted as the neutral nitrates UO₂(NO₃)₂, Th(NO₃)₄ and Nd(NO₃)₃ in supercritical carbon dioxide because of the high nitrate concentration in 6 M HNO₃. Binary mixtures of TBP and fluorinated β-diketones, such as TTA, also extract uranyl, Th(IV) and Nd(III) from the acid solution using supercritical carbon dioxide. These results show that the actinides and lanthanides [Nd(III) is a typical lanthanide] can be extracted from acid solutions, particularly nitric acid solutions, on an industrial scale using supercritical carbon dioxide as a solvent.

The triple point of carbon dioxide is 5.1 atm and -56.3 °C. Therefore, at room temperature carbon dioxide becomes a liquid above 5.1 atm. Depending on the pressure, liquid carbon dioxide has a density comparable or slightly greater than supercritical carbon dioxide, thus the solvation power of liquid carbon dioxide is comparable to that of supercritical carbon dioxide. This means liquid carbon dioxide should also be able to dissolve the metal complexes described above. However, liquid carbon dioxide does not have the "gas-like" properties of the supercritical carbon dioxide. This means liquid carbon dioxide has large a viscosity, small diffusivity, and consequently poor penetration power compared with supercritical carbon dioxide. Thus, it is expected that liquid carbon dioxide should also be able to extract lanthanides and actinides from acid solutions with TBP or a mixture of TBP and a fluorinated β-diketone as the extractant, but with lower efficiencies. The extraction efficiency of liquid carbon dioxide is expected to depend on the applied pressure. It is also expected that the extraction efficiency of liquid carbon dioxide can be improved with mechanical stirring and agitation.

The following Examples II-V concern the extraction of metal or metalloid species from acidic solutions using primarily organophosphate or organophosphine oxides as the extracting agents. The preceding examples indicated that TBP alone, and TBP or other extracting agents in combination with β-diketones, efficiently extract metal or metalloid species from acidic environments. The following examples demonstrate that mixtures of extracting agents that include β-diketones are not necessarily required for the efficient extraction of metal or metalloid species from acidic mixtures. The results obtained from Examples II-V are summarized below in Table III.

### EXAMPLE II

This example describes the extraction of U(VI) and Th(IV) from an acidified aqueous media using supercritical carbon dioxide and tributylphosphine oxide (TBPO) as a chelating agent. U(VI) and Th(IV) were prepared from their nitrate salts obtained commercially from such distributors as Baker Chemical Co. and Mallinckrodt Inc. All acidic solutions, regardless of the acid concentration, contained about 50 µg/ml each of U(VI) and Th(IV). For this particular example, the acidic solution was 6M HNO₃ and 3M LiNO₃. TBPO was obtained from Aldrich Chemical Company. All other chemicals used were analytical reagent grade.

All experiments were performed with a lab-built SFE extraction apparatus as described above and shown in FIG. 2. TBPO is a solid extraction reagent, and was placed in a 3.5 mL high pressure cylinder connected upstream of the liquid extraction vessel. A fused-silica tubing (Dionex, 50 um i.d. and 20 cm in length) was used as the pressure restriction for the exit gas. Supercritical CO₂ was introduced through the upstream cylinder containing TBPO and then introduced through the extraction vessel containing the acidic solution of U(VI) and Th(IV). The ions were complexed and extracted under static conditions for about 15 minutes, and then under dynamic conditions for 15 minutes. The supercritical conditions were 60°C and 200 atm.

The results of this extraction procedure are provided below in Table III. More specifically, TBPO extracted U(VI) from the acidic medium with greater than 99% efficiency. TBPO extracted Th(IV) from the acidic medium with an average efficiency of about 97.5 percent. Thus, these results show that actinides can be extracted efficiently from an acidic medium using organophosphine oxides in supercritical carbon dioxide.

In a manner similar to that described in Example II, TBPO has been used to extract U(VI) and Th(IV) ions from various acidic solutions. These results also are summarized in Table III. TBPO in supercritical carbon dioxide efficiently extracted U(VI) from 6M HNO₃ without added nitrate salts at an average efficiency of about 98.5%. TBPO in supercritical carbon dioxide extracted Th(IV) from 6M HNO₃ without added nitrate salts with an average efficiency of about 98%. When the concentration of the acid was reduced to 1M HNO₃, U(VI) was extracted with an average efficiency of about 99%, and Th(IV) was extracted with an average efficiency of about 99.5%. Finally, when the concentration of the acid was reduced to 0.1M, TBPO extracted U(VI) with an average efficiency of about 93%, and Th(IV) with an average efficiency of about 92%. Thus, Table III clearly demonstrates that TBPO efficiently extracts metal and/or metalloid species from acidic solutions, without the need for using additional extracting agents such as β-diketones.

### EXAMPLE III

In a manner similar to that described in Example II, a number of organophosphate and organophosphine oxide extracting agents have been tested, including TBP, TOPO, and triphenylphosphine oxide (TPPO). Again, the metal ions were U(VI) and Th(IV). These ions were extracted from 6M HNO₃ and 3M LINO₃, 6M HNO₃, 1M HNO₃ and 0.1M HNO₃ using supercritical carbon dioxide. U(VI) and Th(IV) were prepared from their nitrate salts obtained commercially from such distributors as Baker Chemical Co. and Mallinckrodt Inc. All acidic solutions, regardless of the acid concentration, contained about 50 µg/ml each of U(VI) and Th(IV). TBP, TOPO and TPPO were obtained from Aldrich Chemical Company. All other chemicals used were analytical reagent grade. The ions were complexed and extracted under static conditions from each of the acidic test environments for about 15 minutes, and then under dynamic conditions for about 15 minutes. The supercritical conditions were 60°C and 200 atm. The amount of uranium and thorium ions extracted were determined as described above.

The results provided in Table III show that actinides were efficiently extracted from acidic solutions using both organophosphate and organophosphine oxides in supercritical carbon dioxide. Extraction utilizing the lower alkylphosphate compounds alone, such as TBP, is especially convenient because TBP is a relatively inexpensive chelating agent. TBP is a liquid and is highly soluble in supercritical carbon dioxide, and therefore is easily mixed with samples requiring extraction.

**TABLE III**

| Sample Matrix | Extraction Reagent U(VI) | Percent Extraction(%) Th(IV) |
|---|---|---|
| 6M HNO3 + 3M LiNO3 | | |
| | | |
| TBP | 98 | 93 |
| TBP | 99 | 92 |
| TBPO | 99 | 98 |
| TBPO | 99 | 97 |
| TOPO | 99 | 98 |
| TOPO | 99 | 100 |
| (comparative) TPPO | 99 | 88 |
| (comparative) TPPO | 97 | 85 |
| (comparative) TTA | 02 | 03 |
| 6M HNO3 TBP | 91 | 80 |
| TBP | 89 | 83 |
| TBPO | 99 | 98 |
| TBPO | 98 | 98 |
| TOPO | 100 | 97 |
| TOPO | 99 | 98 |
| (comparative) TPPO | 97 | 70 |
| (comparative) TPPO | 99 | 68 |
| (comparative) TTA | 05 | 03 |
| (comparative) TTA | 00 | 01 |
| 1M HNO3 TBP | 52 | 26 |
| TBP | 50 | 28 |
| TBP+TTA | 70 | 85 |
| TBP+TTA | 70 | 86 |
| TBPO | 99 | 99 |
| TBPO | 99 | 100 |
| TOPO | 100 | 100 |
| TOPO | 97 | 96 |
| (comparative) TPPO | 97 | 30 |
| (comparative) TPPO+TTA | 99 | 86 |
| (comparative) TPPO+TTA | 99 | 94 |
| (comparative) TTA | 04 | 12 |
| 0.1M HNO3 TBP | 12 | 20 |
| TBP | 14 | 26 |
| TBP+TTA | 87 | 96 |
| TBP+TTA | 88 | 96 |
| TBPO | 97 | 91 |
| TOPO | 89 | 93 |
| TOPO | 95 | 97 |
| (comparative) TPPO | 94 | 29 |
| (comparative) TPPO | 90 | 20 |
| (comparative) TTA | 24 | 65 |
| *TBP: Tributyl phosphate | | |
| TBPO: Tributylphosphine oxide | | |
| TOPO: Tri-n-octylphosphine oxide | | |
| TPPO: Triphenylphosphine oxide | | |
| TTA: Thenoyltrifluoroacetone | | |

### EXAMPLE IV (comparative)

This comparative example describes the possible extraction of U(VI) and Th(IV) ions from acidified aqueous media (including, but not limited to, 6M HNO₃, with or without the addition of a nitrate salt, 1M HNO₃ and 0.1M HNO₃) using supercritical carbon dioxide and di-n-butyl-phenylphosphine oxide. U(VI) and Th(IV) may be prepared from their nitrate salts obtained commercially. All acidic solutions of different acid concentration should contain about 50 µg/ml each of the U(VI) and Th(IV) ions.

This comparative example would show that actinides may be extracted from acidic solutions using supercritical carbon dioxide and organophosphine oxides having mixed ligands, that is both alkyl and aryl ligands attached to the same phosphorous atom, with high efficiency. The results should be similar to that shown in Table III. The addition of a nitrate salt would be expected to enhance the extraction efficiency when organophosphine oxides having mixed ligands are used as the extracting agent.

### EXAMPLE V (comparative)

This comparative example describes the possible extraction of U(VI) and Th(IV) ions from acidified aqueous matrices (such as 6M HNO₃, with or without the addition of a nitrate salt, 1M HNO₃ and 0.1M HNO₃) using supercritical carbon dioxide and di-n-butyl-phenyl phosphate. U(VI) and Th(IV) may be prepared from their nitrate salts obtained commercially. All acidic solutions of different acid concentration should contain about 50 µg/ml each of the U(VI) and Th(IV) ions.

This comparative example would show that actinides may be extracted from acidic solutions with an efficiency comparable to that shown in Table III using supercritical carbon dioxide and organophosphates having mixed ligands, that is both alkyl and aryl ligands attached to the same phosphorous atom. The addition of a nitrate salt would be expected to enhance the extraction efficiency when organophosphates having mixed ligands are used as the extracting agent.

## Claims

1. A composition for extracting metal or metalloid species from acidic media, comprising: carbon dioxide; and a chelating agent selected from the group consisting of trialkyl phosphates, trialkylphosphine oxides, and mixtures thereof.

2. The composition according to claim 1 wherein the carbon dioxide is subcritical.

3. The composition according to claim 1 wherein the carbon dioxide is supercritical.

4. The composition according to claim 1, 2 or 3 wherein the phosphate chelating agents are represented by the formula 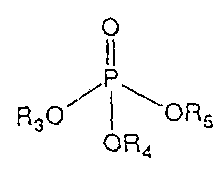 wherein R₃ - R₅ are alkyl groups having 10 or fewer carbon atoms and wherein the phosphine oxide chelating agents are represented by the formula 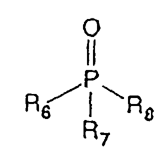 wherein R₆ - R₈ are alkyl groups having 10 or fewer carbon atoms

5. The composition according to claim 4 wherein
R₃=R₄=R₅.

6. The composition according to claim 4 or 5 wherein R₆=R₇=R₈.

7. The composition according to claim 4, wherein R₃ - R₅ are independently selected from the group consisting of butyl, octyl, and mixtures thereof, and wherein R6 - Rs are independently selected from the group consisting of butyl, octyl, and mixtures thereof.

8. The composition according to any one of the preceding claims wherein the chelating agent is selected from the group consisting of tributyl phosphate, tributylphosphine oxide, tri-n-octylphosphine oxide, and mixtures thereof.

9. The composition according to any one of the preceding claims and further comprising adding a modifying solvent to the carbon dioxide, wherein the modifying solvent is selected from the group consisting of water, alkyl alcohols having 10 or fewer carbon atoms, and mixtures thereof.

10. A method for extracting metal or metalloid species from an acidic media comprising exposing the acidic media to a composition according to any one of claims 1 to 9, at least one of the chelating agents forming chelates with the species, the chelates being soluble in the carbon dioxide.

11. The method according to Claim 10 wherein the exposing step comprises continuously flowing supercritical carbon dioxide through the solid or liquid.

12. The method according to Claim 10 or 11 wherein the media is an acidic solution.

13. The method according to Claim 12 wherein the acidic solution also includes a salt.

14. The method according to Claim 13 wherein the acidic solution also includes a metal salt.

15. The method according to Claim 14 wherein the solution is a nitric acid solution, and the salt is a nitrate salt.

16. A method for treating acidic waste material containing metalloid and metal waste species, comprising the steps of:
providing a container of the acidic waste material;
exposing the waste material in the container to supercritical carbon dioxide containing a chelating agent selected from the group consisting of trialkyl phosphates, trialkylphosphine oxides, and mixtures thereof, at least one of the chelating agents forming chelates with the species, the chelates being soluble in the carbon dioxide; and removing the carbon dioxide and solubilized waste species from the container.

17. The method according to claim 16 comprising adding a salt to the waste material, and wherein the chelating agent is selected from the group consisting of tributyl phosphate, tributylphosphine oxide, tri-n-octylphosphine oxide, and mixtures thereof.

## Patentansprüche

1. Zusammensetzung zum Extrahieren von Metall- oder Halbmetallspezies aus sauren Medien, welche umfaßt: Kohlenstoffdioxid; und einen Chelatbildner, der ausgewählt ist aus der Gruppe bestehend aus Trialkylphosphaten, Trialkylphosphinoxiden und Mischungen derselben.

2. Zusammensetzung nach Anspruch 1, **dadurch gekennzeichnet, daß** das Kohlenstoffdioxid unterkritisch ist.

3. Zusammensetzung nach Anspruch 1, **dadurch gekennzeichnet, daß** das Kohlenstoffdioxid überkritisch ist.

4. Zusammensetzung nach Anspruch 1, 2 oder 3, **dadurch gekennzeichnet, daß** die Phosphatchelatbildner dargestellt sind durch die Formel 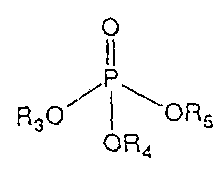 wobei R₃ bis R₅ Alkylgruppen mit 10 oder weniger Kohlenstoffatomen sind, und wobei die Phosphinoxidchelatbildner dargestellt sind durch die Formel 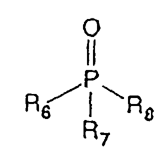 wobei R₆ bis R₈ Alkylgruppen mit 10 oder weniger Kohlenstoffatomen sind.

5. Zusammensetzung nach Anspruch 4, **dadurch gekennzeichnet, daß** R₃ = R₄ = R₅.

6. Zusammensetzung nach Anspruch 4 oder 5, **dadurch gekennzeichnet, daß** R₆ = R₇ = R₈.

7. Zusammensetzung nach Anspruch 4, **dadurch gekennzeichnet, daß** R₃ bis R₅ unabhängig ausgewählt sind aus der Gruppe bestehend aus Butyl, Octyl und Mischungen derselben, und wobei R₆ bis R₈ unabhängig ausgewählt sind aus der Gruppe bestehend aus Butyl, Octyl und Mischungen derselben.

8. Zusammensetzung nach einem der vorangehenden Ansprüche, **dadurch gekennzeichnet, daß** der Chelatbildner ausgewählt ist aus der Gruppe bestehend aus Tributylphosphat, Tributylphosphinoxid, Tri-n-octylphosphinoxid und Mischungen derselben.

9. Zusammensetzung nach einem der vorangehenden Ansprüche und weiter umfassend einen Zusatz eines modifizierenden Lösungsmittels zu dem Kohlenstoffdioxid, **dadurch gekennzeichnet, daß** das modifizierende Lösungsmittel ausgewählt ist aus der Gruppe bestehend aus Wasser, Alkylalkoholen mit 10 oder weniger Kohlenstoffatomen und Mischungen derselben.

10. Verfahren zum Extrahieren von Metall- oder Halbmetallspezies aus sauren Medien, welches umfaßt ein Aussetzen der sauren Medien einer Zusammensetzung gemäß einem der Ansprüche 1 bis 9, wobei wenigstens einer der Chelatbildner Chelate mit den Spezies bildet, wobei die Chelate löslich in dem Kohlenstoffdioxid sind.

11. Verfahren nach Anspruch 10, **dadurch gekennzeichnet, daß** der Aussetzungsschritt ein kontinuierliches Fließen von superkritischem Kohlenstoffdioxid durch den Feststoff oder die Flüssigkeit umfaßt.

12. Verfahren nach Anspruch 10 oder 11, **dadurch gekennzeichnet, daß** das Medium eine saure Lösung ist.

13. Verfahren nach Anspruch 12, **dadurch gekennzeichnet, daß** die saure Lösung ebenfalls ein Salz einschließt.

14. Verfahren nach Anspruch 13, **dadurch gekennzeichnet, daß** die saure Lösung ebenfalls ein Metallsalz einschließt.

15. Verfahren nach Anspruch 14, **dadurch gekennzeichnet, daß** die Lösung eine Salpetersäurelösung ist und das Salz ein Nitratsalz ist.

16. Verfahren zum Behandeln sauren Abfallmaterials, welches Halbmetall- und Metallabfallspezies enthält, welches die Schritte umfaßt:
Bereitstellen eines Behälters des sauren Abfallmaterials;
Aussetzen des Abfallmaterials in dem Behälter superkritischem Kohlenstoffdioxid, welcher einen Chelatbildner enthält, ausgewählt aus der Gruppe bestehend aus Trialkylphosphaten, Trialkylphosphinoxiden und Mischungen derselben, wobei wenigstens einer der Chelatbildner Chelate mit den Spezies bildet, wobei die Chelate löslich in dem Kohlenstoffdioxid sind; und Entfernen des Kohlenstoffdioxids und löslich gemachter Abfallspezies aus dem Behälter.

17. Verfahren nach Anspruch 16, welches umfaßt ein Zufügen eines Salzes zu dem Abfallmaterial, und wobei der Chelatbildner ausgewählt wird aus der Gruppe bestehend aus Tributylphosphat, Tributylphosphinoxid, Tri-n-octylphosphinoxid und Mischungen derselben.

## Revendications

1. Composition pour extraire des espèces de métaux ou de métalloïdes de milieux acides, comprenant du dioxyde de carbone, et une agent chélatant choisi dans l'ensemble comprenant les phosphates de trialkyles, les oxydes de trialkylphosphine et leurs mélanges.

2. Composition selon la revendication 1, dans laquelle le dioxyde de carbone est sous-critique.

3. Composition selon la revendication 1, dans laquelle le dioxyde de carbone est supercritique.

4. Composition selon la revendication 1, 2 ou 3, dans laquelle les agents chélatant de type phosphate sont représentés par la formule 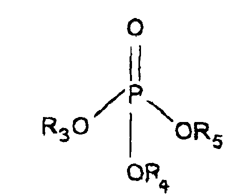 dans laquelle R₃ à R₅ sont des groupes alkyles ayant 10 atomes de carbone ou moins, et où les agents chélatant de type phosphine sont représentés par la formule 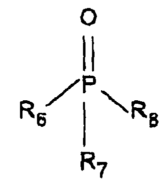 dans laquelle R₆ à R₈ sont des groupes alkyles ayant 10 atomes de carbone ou moins.

5. Composition selon la revendication 4, dans laquelle R₃ = R₄ = R₅.

6. Composition selon la revendication 4 ou 5, dans laquelle R₆ = R₇ = R₈.

7. Composition selon la revendication 4, dans laquelle R₃ à R₅ sont chacun indépendamment des autres choisis dans l'ensemble comprenant les groupes butyles, octyles et leurs mélanges, R₆ à R₈ étant chacun indépendamment des autres choisis dans l'ensemble comprenant les groupes butyles, octyles et leurs mélanges.

8. Composition selon l'une quelconque des revendications précédentes, dans laquelle l'agent chélatant est choisi dans l'ensemble comprenant le phosphate de tributyle, l'oxyde de tributylphosphine, l'oxyde de tri-n-octylphosphine et leurs mélanges.

9. Composition selon l'une quelconque des revendications précédentes, et comprenant en outre l'addition d'un solvant modifiant au dioxyde de carbone, dans laquelle le solvant modifiant est choisi dans l'ensemble comprenant l'eau, les alcools alkyliques ayant 10 atomes de carbone ou moins, et leurs mélanges.

10. Procédé pour extraire des espèces de métaux ou de métalloïdes d'un milieu acide, qui comprend l'exposition du milieu acide à une composition selon l'une quelconque des revendications 1 à 9, au moins l'un des agents chélatant formant des chélates avec l'espèce, les chélates étant solubles dans le dioxyde de carbone.

11. Procédé selon la revendication 10, dans lequel l'étape d'exposition comprend l'écoulement continu de dioxyde de carbone supercritique a travers le solide ou le liquide.

12. Procédé selon la revendication 10 ou 11, dans lequel le milieu est une solution acide.

13. Procédé selon la revendication 12, dans lequel la solution acide comprend aussi un sel.

14. Procédé selon la revendication 13, dans lequel la solution acide comprend aussi un sel métallique.

15. Procédé selon la revendication 14, dans lequel la solution une solution d'acide nitrique, et le sel est un sel nitrate.

16. Procédé de traitement d'effluents acides contenant une espèce d'effluent métalloïde et métallique, qui comprend les étapes de
mise à disposition d'un récipient pour l'effluent acide ;
exposition de l'effluent se trouvant dans le récipient à du dioxyde de carbone supercritique contenant un agent chélatant choisi dans l'ensemble comprenant les phosphates de trialkyle, les oxydes de trialkylphosphine et leurs mélanges, au moins l'un des agents chélatant formant des chélates avec l'espèce, les chélates étant solubles dans le dioxyde de carbone ; et enlèvement du dioxyde de carbone et de l'effluent solubilisé se trouvant dans le récipient.

17. Procédé selon la revendication 16, qui comprend l'addition d'un sel à l'effluent, et où l'agent chélatant est choisi dans l'ensemble comprenant le phosphate de tributyle, l'oxyde de tributylphosphine, l'oxyde de tri-n-octylphosphine et leurs mélanges.
